# EUROPEAN PATENT SPECIFICATION

(11) **EP 0 841 119 B1**
(45) Date of publication and mention of the grant of the patent: **23.01.2002**
(21) Application number: 97118647.3
(22) Date of filing: 27.10.1997
(51) Int. Cl.: B23Q 1/01, B23Q 11/00, B23B 3/30

(54) **Two-opposed-spindle lathe**
Drehmaschine mit zwei gegenüberliegenden Spindeln
Tour à deux broches opposées

(30) Priority: 08.11.1996 JP 31270496
(43) Date of publication of application: 13.05.1998
(73) Proprietor: Murata Kikai Kabushiki Kaisha, Minami-ku, Kyoto-shi, Kyoto 601 (JP)
(72) Inventor: Matsuno, Osamu, Kani-shi, Gifu (JP)
(74) Representative: Liedl, Christine, Dipl.-Chem.

(56) References cited:
- EP-A- 0 289 333
- GB-A- 2 178 991

## Description

The present invention relates to a two-opposed-spindle lathe according to the preamble of claim 1.

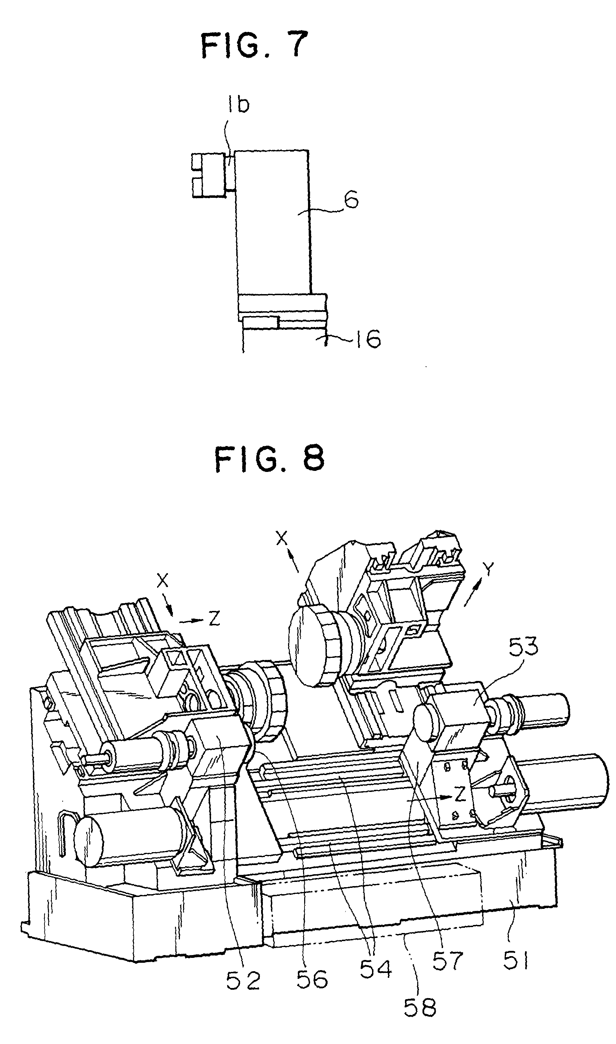

In conventional turret-type two-opposed-spindle lathes a slant bed 51 with its top surface inclined as shown in Figure 8 is used to allow a head stock 53 to be moved back and forth on a rail 54 with a head stock 52 fixed so that a workpiece can be delivered from a main spindle 57 of the head stock 53 to a main spindle 56 of the head stock 52. The rail 54 is covered with a telescopic cover (not shown in the drawing) that expands and contracts as the movable head stock 53 moves back and forth in order to prevent chips from falling onto the rail 54 without obstructing the movement of the movable head stock 53. Such a Lathe with an inclined bed 51 is advantageous in that chips falling onto the bed 51 slide down onto the front of the machine and are then collected in a chip-collecting box 58 or a chip conveyor (not shown in the drawing) disposed in front of the bed 51, thereby facilitating the collection of chips.

Because, however, the telescopic cover that covers the rail 54 used to guide the head stock prevents chips from sliding down, it is difficult to sufficiently increase the efficiency of chip collection.
In addition, because the movable head stock 53 extends vertically from the inclined top surface of the bed 51, its center of gravity is in front of the rail 54 with a moment load acting on the rail, thereby requiring the guiding section of the rail 54 to be very rigid. Thus, the mechanism of the guiding section must be large in size.

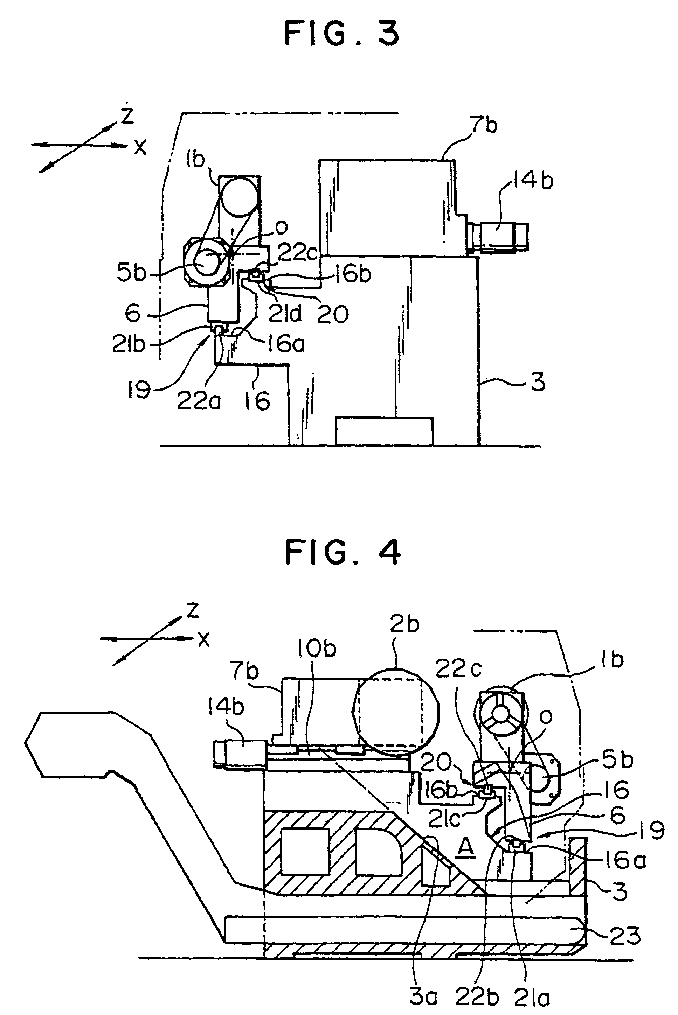

A two-opposed-spindle lathe as defined in the preamble of claim 1 is known from EP-A-0 289 333. Fig. 3 thereof shows in Fig. 27 the chucks 2036,2056 in a machining position where chips may fall onto the guide rails 202a. Same applies to the embodiment of Fig. 3 if long work pieces are to be machined.

It is an object of this invention to provide a two-opposed -spindle lathe where chips are prevented from falling onto the receiving member at the front end of head stock guiding section.

This object is solved by the features defined in the characterizing portion of claim 1.

### Brief Description of the Drawing

Figure 1 is a plan view of a two-opposed-spindle lathe according to one embodiment of this invention.

Figure 2 is a front view of the two-opposed-spindle lathe.

Figure 3 is a right-side view of the two-opposed-spindle lathe.

Figure 4 is a cross-sectional view taken along line IV-IV in Figure 2.

Figures 5A to 5C are a plan view, a front view, and a left-side view showing a movable head stock of the two-opposed-spindle lathe located at its origin.

Figures 6A and 6B are a plan view and a front view showing the movable head stock when it has advanced furthest, and Figures 6C and 6D are a plan view and a front view showing the movable head stock in its processing position.

Figure 7 is a partial front view of a movable head stock of another embodiment of this invention.

Figure 8 is a perspective view of a conventional two-opposed-spindle lathe.

### Detailed Description of the Preferred Embodiments

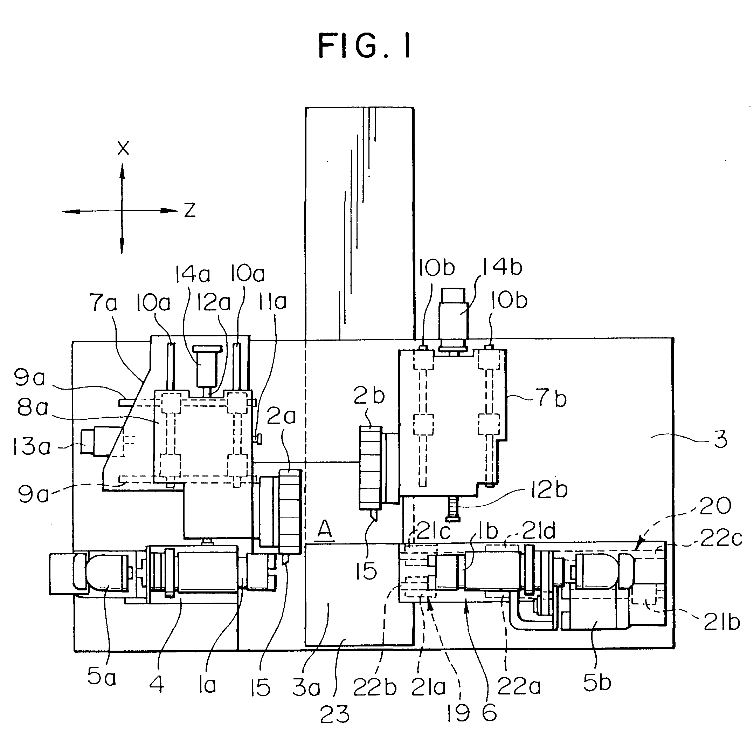

One embodiment of this invention is described with reference to Figures 1 to 6. Figures 1, 2, and 3 are a plan view, a front view, and a right-side view showing an approximate configuration of a two-opposed-spindle lathe, respectively. This two-opposed-spindle lathe is a turret lathe having first and second main spindles 1a and 1b laterally opposed to each other with their axes aligned, and first and second turrets 2a and 2b disposed so as to correspond to the main spindles 1a and 1b. The first main spindle 1a is supported by a fixed head stock 4 fixed to a bed 3. A spindle motor 5a to rotationally drive the first main spindle 1a is installed on the fixed head stock 4.

A slide 7a for the first turret 2a is installed on the side of the first main spindle 1a, that is, behind the position on the bed 3 at which the fixed head stock 4 is installed. The slide 7a has an index housing 8a and is installed on rails 9a on the bed 3 so as to move in the axial direction of the main spindle 1a (the direction of the Z-axis). The index housing 8a is installed on rails 10a on the slide 7a so as to move in the direction (the direction of the X-axis) orthogonal to the direction of the Z-axis, with the turret 2a supported by the index housing 8a. The slide 7a and the index housing 8a are fed in the directions of the Z- and X-axes by Z- and X-axis servo motors 13a and 14a via feed screws 11a and 12a, respectively. The turret 2a is shaped like a drum with a polygonal front shape, and various tools 15 are loaded in tool stations, each consisting of a circumferential surface of the turret.

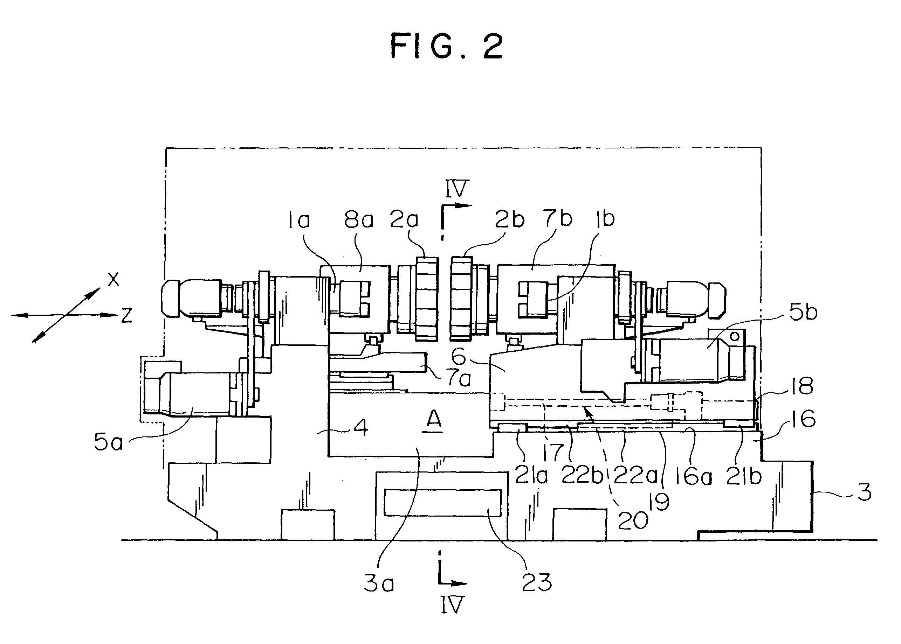

The second main spindle 1b opposed to the first main spindle 1a is supported by the movable head stock 6. The movable head stock 6 is installed on a head-stock guiding table section 16 formed on the bed 3 with a space A of a specified distance existing axially in front of the fixed head stock 4 so that the head stock 6 can be moved back and forth in the direction of the Z-axis opposed to the first main spindle 1a. The movable head stock 6 is moved in the direction of the Z-axis by a Z-axis servo motor 18 via a feed screw 17 (Figure 2).

As shown in the side views in Figures 3 and 4, the movable head-stock guiding table section 16 is formed as two vertical stages extending in the direction of the Z-axis and having stage surfaces 16a and 16b, respectively, with two parallel guiding tracks 19 and 20 installed on the stage surfaces 16a and 16b. The guiding tracks 19 and 20 can be installed easily because the stage surfaces 16a and 16b are horizontal. The inclining direction of the stages constituted by the stage surfaces 16a and 16b is approximately parallel to the inclining direction between the second main spindle 1b and the spindle motor 5b, so the size of the machine can be reduced.

The guiding track 19 installed on the lower front stage surface 16a consists of a protrusion-receiving member 21a provided at its front end corresponding to the end of the head-stock guiding table section 16 that is close to the first main spindle 1a, and a guiding protrusion 22a extending backward behind the protrusion-receiving member 21a. The guiding protrusion 22a is of a length corresponding to the maximum advancing stroke required when the movable head stroke 6 advances from its origin (that is, its rear most position) toward the first main spindle 1a. A guiding protrusion 22b and the protrusion-receiving member 21b that engage with the protrusion-receiving member 21a and the guiding protrusion 22a, respectively, so as to move back and forth, are installed on the bottom surface of the movable head stock 6. The guiding protrusion 22b extends backward from the front end of the movable head stock 6, and its length corresponds to the maximum advancing stroke of the movable head stock 6. In addition, the protrusion-receiving member 21b is installed at the rear end of the movable head stock 6.

The other guiding track 20 installed on the upper rear stage surface 16b consists of two protrusion-receiving members 21c and 21d provided at the front end of the head-stock guiding table section 16 and in a position behind the first position, respectively. A guiding protrusion 22c that engages with both protrusion-receiving members 21c and 21d so as to move back and forth and that extends in the direction of the Z-axis is installed on the bottom surface of the movable head stock 6. The guide protrusion 22c covers the entire length of the movable head stock 6 in the direction of the Z-axis. The protrusion-receiving members 21a to 21d consist of rolling or sliding linear bearings.

As shown in the side views in Figures 3 and 4, the movable head stock 6 has a generally inverse L-shaped cross section and the second main spindle 1b is supported at the upper end of the upper stage corresponding to the guiding track 20. A spindle motor 5b to rotationally drive the second main spindle 1b is supported on the front surface of the movable head stock 6 corresponding to the guiding track 19 on the lower stage. This configuration allows the movable head stock 6 to be supported on the head-stock guiding table section 16 so that the center of gravity 0 of the movable head stock 6 is located within the width of the head-stock guiding table section 16 between the two parallel guiding tracks 19 and 20.

In addition, because the head-stock guiding table section 16 and the guiding tracks 19 and 20 are configured as described above, a moment that causes the movable head stock 6 to be inclined beyond the front of the bed 3 is not applied to the movable head stock 6 as in conventional examples in which the movable head stock is directly disposed on the slant bed. Thus, high rigidity is not required and the small-capacity Z-axis servo motor 18 can stably and smoothly drive the movable head stock 6 back and forth.

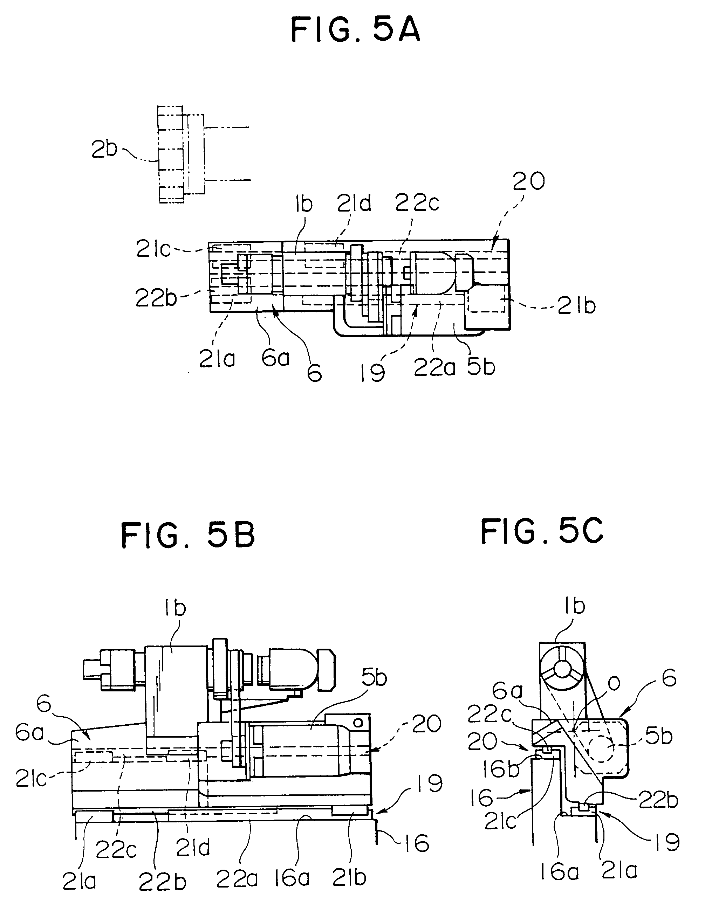

As shown in Figures 5B and 5C, the top surface 6a of the part of the movable head stock 6 that extends downward below the end of the main spindle has an inclined cross section as seen from the front of the main spindle and is also inclined toward its front, so chips falling onto the movable head stock 6 slide down smoothly.

The top surface 3a of the bed 3 below the space A sandwiched by both main spindles 1a and 1b is inclined toward its front as shown in the cross-sectional view in Figure 4, and a chip conveyor 23 for collecting chips is installed so as to extend from the front of the bed 3 to its rear. That is, the chip conveyor 23 is installed in the chip-collecting region, and the movable head stock 6 protrudes beyond the chip-collecting region to allow the second main spindle 1b to approach the first main spindle 1a. When the movable head stock 6 moves away from the first main spindle, it returns behind the chip-collecting region.

The second turret 2b installed so as to correspond to the second main spindle 1b has a configuration similar to that of the first turret 2a, and its slide 7b is installed on the side of the second spindle 1b, that is, behind that position of the bed 3 at which the movable head-stock guiding table section 16 is installed. The slide 7b is installed on rails 10b on the bed 3 so as to move in the direction of the X-axis, and is fed in this direction by the X-axis servo motor 14b via the feed screw 12b. No means for moving the second turret 2b in the direction of the Z-axis is provided and the second turret is moved in this direction by moving the movable head stock 6.

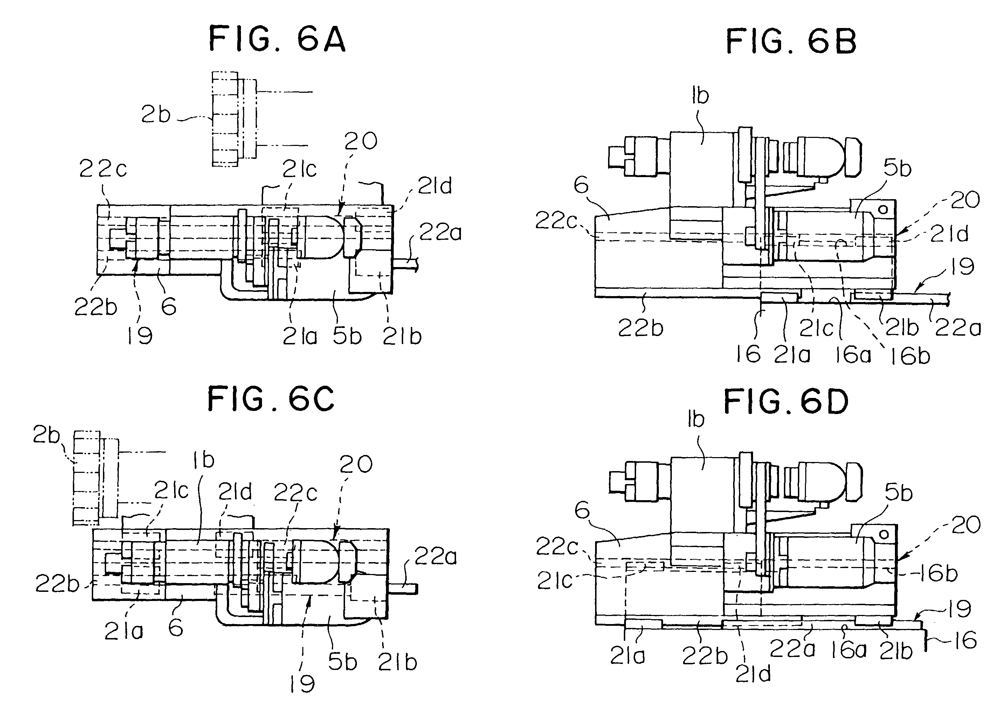

The movement of the movable head stock 6 in the two-opposed-spindle is described with reference to Figures 5 and 6. While the movable head stock 6 is standing by at its original position shown in Figure 5, the protrusion-receiving member 21a at the front end of the guiding track 19 provided on the lower stage surface 16a of the head-stock guiding table section 16 engages the guiding protrusion 22b of the movable head stock 6, while the guiding protrusion 22a at the rear position engages the protrusion-receiving member 21b of the movable head stock 6, thereby increasing the interval between these engagement positions. In addition, both protrusion-receiving members 21c and 21d of the guiding track 20 provided on the upper stage surface 16b of the head-stock guiding table section 16 engage with the guiding protrusion 22c of the movable head stock 6. On the other hand, the center of gravity of the movable head stock 6 is located within the width between the guiding tracks 19 and 20 on the upper and lower stages installed in parallel to each other, as described above. In this manner, because, in this standby position, the interval between the protrusion-receiving members 21a and 21b is increased and the center of gravity of the movable head stock 6 is located between both guiding members 19 and 20, the movable head stock 6 is supported stably on the movable head-stock guiding table section 16, and the mechanism including the movable head stock 6 and the guiding tracks 19 and 20 of the head-stock guiding table section 16 is sufficiently rigid.

When the movable head stock 6 is located furthest from its origin and the second main spindle 1b is located closest to the first main spindle 1a in order to allow the main spindle 1a to receive a workpiece W with only one side of it processed (for example, the advancing stroke is approximately 650 mm), the movable head stock 6 is held in a cantilever manner relative to the movable head-stock guiding table section 16, as shown in Figures 6A and 6B. In this state, both protrusion-receiving members 21c and 21d of the guiding track 20 provided on the upper stage surface 16b engage with the guiding protrusion 22c of the movable head stock 6, while the protrusion-receiving member 21a at the front end of the guiding track 19 provided on the lower stage surface 16a engages with the guiding protrusion 22b with the guiding protrusion 22a in a rear position engaging with the protrusion-receiving member 21b of the movable head stock 6. Thus, the movable head stock 6 can be moved stably toward the first main spindle 1a. Because, at this point, the advancing movable head stock 6 and the guiding protrusions 22b and 22c provided on the bottom surface thereof are moved horizontally into the space A between both main spindles 1a and 1b and somewhat above the top surface 3a of the bed 3, chips adhering to the top surface 3a of the bed do not prevent the head stock from advancing. The rigidity of the mechanism including the movable head stock 6 and the guiding tracks 19 and 20 of the head-stock guiding table section 16 decreases, but this operation involves only the delivery of a workpiece and does not require high rigidity.

If a workpiece with one side processed that is received by the second main spindle 1b is processed by the second turret 2b, the movable head stock 6 is located, as shown in Figures 6C and 6D, somewhat closer to the first main spindle 1a than to the origin (for example, the advancing stroke is approximately 110 mm). Chips resulting from processing slide over the top surface 3a of the bed below the space A between both main spindles 1a and 1b and fall onto the chip-collecting conveyor 23 located in front of the bed 3. The conveyor 23 then conveys the chips outside the machine for collection. In this case, there is no guide rail for moving the movable head stock 6 back and forth on the inclined top surface 3a of the bed over which chips slide, as in conventional examples, so the chip collection rate is improved. In addition, even in this processing position, almost the entire movable head stock 6 is supported on the head-stock guiding table section 16, so the mechanism including the movable head stock 6 and the guiding tracks 19 and 20 of the head-stock guiding table section 16 is sufficiently rigid during processing.

According to this embodiment, although the lower part of the movable head stock 6 protrudes forward beyond the end of the second main spindle 1b, the entire movable head stock 6 may be located behind the end of the second main spindle 1b, as shown in Figure 7. This configuration allows all the chips to fall directly onto the inclined bed 1 instead of falling onto the movable head stock 6,thereby further improving the efficiency of chip collection.

According to the two-opposed-spindle lathe of this invention, because the movable head stock is supported on the head-stock guiding table section away from the fixed head stock, there is no need to provide a guiding means for the movable head stock, such as a rail in a region in which chips fall, in order to improve the chip collection rate.

In addition, if the center of gravity of the movable head stock is located above the guiding track of the head-stock guiding table section, no moment load is applied, the guiding track need not be very rigid, and the driving motor need not have a large capacity.

Furthermore, the movable head stock is supported in a cantilever manner during the delivery of a workpiece when a high supporting rigidity is not required, that is, when it is in its forward position, whereas it is supported at both ends during processing, that is, when it is in its backward position. Thus, the rigidity can be maintained during processing while the efficiency of chip collection is improved. Parts costs can also be reduced.

## Claims

1. A two-opposed-spindle lathe comprising a fixed head stock (4) that supports a first main spindle (1a), a movable head stock (6) that supports a second main spindle (1b) and that can approach the fixed head stock (4), and a head-stock guiding section (16) that supports the movable head stock (6) and that is axially installed in front of the fixed head stock (4) giving a space (A) of a specified distance for collecting chips, wherein the movable head-stock (6) protrudes from the guiding end of the head-stock guiding section (16) into the space in order to allow the second head stock to approach the first head stock
**characterized in that**
during the cutting operation the movable head stock (6) covers a protrusion receiving member (21a) provided at the front end of the head stock guiding section (16) and engaging with a guiding protrusion (22b) on the movable headstock (6), to prevent chips from falling onto the receiving member (21a).

2. A two-opposed-spindle lathe according to claim 1
**characterized in that**
the head stock guiding section (16) has at least one guiding track (19, 20) extending in the direction of the movable head stock (6), and that the movable head stock (6) has its center of gravity (O) above the guiding track.

3. A two-opposed spindle lathe according to claim 2
**characterized in that**
the head stock guiding section (16) has two parallel guiding tracks (19, 20) wherein at least one (19) of the two guiding tracks has the protrusion receiving member (21a) and the guiding protrusion (22b) on the movable head stock (6) extends backward from the front end of the movable head stock (6).

4. A two-opposed spindle lathe according to claim 3,
**characterized in that**
in the other guiding track (20) has two protrusion receiving members (21c, 21d) engaging with a guiding protrusion (22c) on the movable head stock.

## Patentansprüche

1. Drehmaschine mit zwei gegenüberliegenden Spindeln, bestehend aus einem festem Spindelkasten (4), der eine erste Hauptspindel (1a) trägt, einen verstellbaren Spindelkasten (6), der eine zweite Hauptspindel (1b) trägt und sich dem ersten Spindelkasten (4) annähern kann, und einer Spindelkastenführung (16), die den verstellbaren Spindelkasten (6) trägt und axial vor dem festen Reitstock angeordnet ist, so daß ein Zwischenraum (A) mit einer bestimmten Abmessung zum Sammeln von Spänen geschaffen wird, wobei der verstellbare Spindelkasten (6) vom Führungsende der Spindelkastenführung (16) in den Zwischenraum vorsteht, damit sich der zweite Spindelkasten dem ersten Spindelkasten annähern kann,
**dadurch gekennzeichnet, daß**
während des Schneidvorgangs der verstellbare Spindelkasten (6) ein Vorsprungsaufnahmeelement (21 a) abdeckt, das am vorderen Ende der Spindelkastenführung (16) vorgesehen ist und mit einem Führungsvorsprung (22b) am verstellbaren Spindelkasten (6) in Eingriff kommt, um zu verhindern, daß Späne auf das Aufnahmeelement (21a) fallen.

2. Drehmaschine mit zwei gegenüberliegenden Spindeln nach Anspruch 1,
**dadurch gekennzeichnet, daß**
die Spindelkastenführung (16) wenigstens eine Führungsschiene (19, 20) hat, die in Richtung des verstellbaren Spindelkastens (6) verläuft, und daß der Schwerpunkt (O) des verstellbaren Spindelkastens (6) über der Führungsschiene liegt.

3. Drehmaschine mit zwei gegenüberliegenden Spindeln nach Anspruch 2,
**dadurch gekennzeichnet, daß**
die Spindelkastenführung (16) zwei parallele Führungsschienen (19, 20) hat, wobei wenigstens eine (19) der beiden Führungsschienen das Vorsprungsaufnahmeelement (21a) hat, und der Führungsvorsprung (22b) am verstellbaren Spindelkasten (6) vom vorderen Ende des verstellbaren Spindelkastens (6) nach hinten verläuft.

4. Drehmaschine mit zwei gegenüberliegenden Spindeln nach Anspruch 3,
**dadurch gekennzeichnet, daß**
die andere Führungsschiene (20) zwei Vorsprungsaufnahmeelemente (21c, 21d) hat, die mit einem Führungsvorsprung (22c) am verstellbaren Reitstock in Eingriff kommen.

## Revendications

1. Tour à deux broches opposées comprenant une poupée fixe (4) qui supporte une première broche principale (1a), une poupée mobile (6) qui supporte une seconde broche principale (1b) et qui peut s'approcher de la poupée fixe (4), et une section de guidage de poupée (16) qui supporte la poupée mobile (6) et qui est axialement installée devant la poupée fixe (4) en laissant subsister un espace (A) d'une distance spécifiée pour recueillir les copeaux, où la poupée mobile (6) fait saillie de l'extrémité de guidage de la section de guidage de poupée (16) dans l'espace pour permettre à la seconde poupée de s'approcher de la première poupée, **caractérisée en ce que** pendant l'opération de coupe, la poupée mobile (6) couvre un élément de réception de saillie (21a) réalisé à l'extrémité frontale de la section de guidage de poupée (16) et venant en prise avec une saillie de guidage (22b) sur la poupée mobile (6) pour empêcher que les copeaux tombent sur l'élément de réception (21a).

2. Tour à deux broches opposées selon la revendication 1, **caractérisée en ce que** la section de guidage de poupée (16) présente au moins un chemin de guidage (19, 20) s'étendant dans la direction de la poupée mobile (6), et **en ce que** la poupée mobile (6) a son centre de gravité (O) au-dessus du chemin de guidage.

3. Tour à deux broches opposées selon la revendication 2, **caractérisée en ce que** la section de guidage de poupée (16) présente deux chemins de guidage parallèles (19, 20), où au moins l'un (19) des deux chemins de guidage présente l'élément de réception de saillie (21a), et la saillie de guidage (22b) sur la poupée mobile (6) s'étend vers l'arrière depuis l'extrémité frontale de la poupée mobile (6).

4. Tour à deux broches opposées selon la revendication 3, **caractérisée en ce que** l'autre chemin de guidage (20) présente deux éléments de réception de saillie (21c, 21d) venant en prise avec une saillie de guidage (22c) sur la poupée mobile.
